**Europäisches Patentamt**

**European Patent Office**

**Office européen des brevets**

(19)

(11) Veröffentlichungsnummer: **0 166 819**

**B1**

(12)

# EUROPÄISCHE PATENTSCHRIFT

(45) Veröffentlichungstag der Patentschrift:
**31.05.89**

(21) Anmeldenummer: **84115585.6**

(22) Anmeldetag: **17.12.84**

(51) Int. Cl.⁴: **G 11 B 5/54**, G 11 B 5/40

(54) **Positioniereinrichtung für einen Magnetplattenspeicher.**

(30) Priorität: **26.06.84 DE 3423502**

(43) Veröffentlichungstag der Anmeldung:
**08.01.86 Patentblatt 86/2**

(45) Bekanntmachung des Hinweises auf die Patenterteilung:
**31.05.89 Patentblatt 89/22**

(84) Benannte Vertragsstaaten:
**AT CH DE FR GB IT LI NL**

(56) Entgegenhaltungen:
**DE-B-1 084 953**
**FR-A-2 075 038**
**GB-A-2 073 501**
**GB-A-2 127 610**
**US-A-4 139 874**

**PATENTS ABSTRACTS OF JAPAN, Band 7, Nr. 127**
**(P-201)1272, 03 Juni 1983, Seite 139 P 201; & JP - A - 58**
**45670**

(73) Patentinhaber: **Siemens Aktiengesellschaft Berlin
und München, Wittelsbacherplatz 2, D-8000
München 2 (DE)**

(72) Erfinder: **Brand, Wilhelm, Dipl.- Ing., Turnerweg 21
B, D-8200 Rosenheim (DE)**
Erfinder: **Vanek, Vaclav, Dipl.- Ing., Wieselweg 10,
D-8013 Haar (DE)**
Erfinder: **Jakobec, Franz, Fasanenstrasse 136,
D-8025 Unterhaching (DE)**

EP 0 166 819 B1

## Beschreibung

Die Erfindung bezieht sich auf eine Positioniereinrichtung für einen Magnetplattenspeicher gemäß den Oberbegriff des Hauptanspruches.

Die technische Entwicklung bei Magnetplattenspeichern geht weiterhin ständig zu höheren Speicherkapazitäten, einerseits sowohl hinsichtlich der Spurdichte und der Bitdichte als Charakteristiken für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, für den sich als Standard in Analogie zu den Abmessungen von konkurrierenden Floppy Disk Laufwerken ein Einbauraum mit einer Einbauhöhe von 82,5 mm und einer Grundfläche von 146 mm x 203 mm als Einheitsgröße herausgebildet hat.

Neben dem Bestreben, möglichst viele Magnetplatten in diesem vorgegebenen Einbauraum unterzubringen, d. h. den mechanischen Aufbau des Magnetplattenstapels und seine Anordnung im Gehäuse des Magnetplattenspeichers fortzuentwickeln, wird auch versucht, die Magnetkopfpositioniereinrichtung zu verbessern, um Zugriffszeit, Positioniergenauigkeit und letztlich Abtastsicherheit zu verbessern. Ein bedeutender Schritt in Richtung auf höhere Speicherdichten bei Magnetplattenspeichern wurde durch ein Positionierverfahren erreicht, bei dem die Magnetköpfe bezüglich der Magnetplatten nicht mehr absolut, sondern relativ in ihrem Lageverhältnis zu einer Servospur mit Hilfe eines Spurlagesignales positioniert werden.

Bei diesem Positionierverfahren ist die Positioniereinrichtung ein bestimmender und integrierter Teil des Servoregelkreises. Dementsprechend sind die mechanischen Eigenschaften der Positioniereinrichtung mitbestimmend für Zugriffszeit, Zugriffsgenauigkeit, die Stabilität des Regelkreises, aber auch die Betriebssicherheit des Plattenspeichers.

Zwei verschiedene Arten von Positioniereinrichtungen sind bekannt, sie werden als Linearpositionierer bzw. als Drehpositionierer bezeichnet. Linearpositionierer besitzen einen die Magnetkopfpositionierarme tragenden Positionierwagen, der bei der Spurauswahl radial zum Magnetplattenstapel z. B. durch ein Tauchspulsystem bewegt wird. Drehpositionierer besitzen dagegen ein Schwenkteil, das auf einer parallel zur Achse des Plattenstapels angeordneten Positioniererachse drehbeweglich gelagert ist. Dieses Schwenkteil weist eine Anzahl von Magnetköpfe tragenden Positionierarmen und darüber hinaus ein Paar Tragarme auf, die bezüglich der Positioniererachse den Schwenkarmen gegenüberliegen. Die Tragarme tragen entweder eine Spule, die gegenüber einem feststehenden Magneten ausgelenkt wird oder einen Magneten, wobei dann die erregte Spule fest angeordnet ist. Im ersteren Fall wird der Drehpositionierer als Schwenkspulpositionierer, im letzteren Fall als Magnetankerpositionierer bezeichnet.

Beide Typen des Drehpositionierers sind an sich, wenigstens im Vergleich zu dem genannten Linearpositionierer, gleichwertig. Drehpositionierer werden bei heute gebräuchlichen kleineren Magnetplattenspeichern sehr häufig eingesetzt, da ihre tatsächlich zu bewegende Masse geringer ist, sie kleiner gebaut werden können und weniger Energie verbrauchen. Diese Drehpositionierer sind daher schneller und trägheitsärmer, d. h. leichter steuerbar, erzeugen aber auch wegen ihres geringeren Energieverbrauches weniger schädliche Wärme innerhalb des Plattenspeichergerätes.

Derartige Drehpositionierer sind z. B. in IEEE Transactions on Magnetics, Vol. Mag-17, No. 4, Juli 1981, S. 1392 ff., Electronics, 21. April 1982, S. 181 ff. oder Mini-Microsystems, Febr. 1983, S. 143 ff. beschrieben. Bei der heutigen Speicherdichte spielt die extrem genaue Zuordnung der Magnetköpfe zu den ihnen zugeordneten Oberflächen der Magnetspeicherplatten eine außerordentliche Rolle. Im laufenden Betrieb fliegen die Köpfe auf einem Luftpolster gleitend, berührungslos über die Oberfläche. Bei Unterschreiten einer minimalen Relativgeschwindigkeit zwischen Kopf und Platte bricht dieses Luftpolster zusammen und der Kopf landet auf der Plattenoberfläche. Eine solche Landung darf nicht in dem Plattenbereich passieren, der für die Informationsspeicherung ausgenutzt und als Datenbereich bezeichnet wird. Es wird daher ein Landebereich definiert, der vom Drehpositionierer in Ruhestellung eingenommen wird. Dabei muß sichergestellt sein, daß der Drehpositionierer nur bei laufendem Plattenspeicherantrieb in den Datenbereich ausschwenkbar ist. Bei bekannten Drehpositionierern wird dazu ein Freigabemagnet verwendet, der den Drehpositionierer erst nach dem Einschalten des Plattenspeicherantriebes freigibt, während der gesamten Betriebszeit angezogen bleibt und somit auf Dauerbetrieb ausgelegt sein muß.

Ein Beispiel dafür ist der in US-A-4 139 874 beschriebene Haltemechanismus. Er weist einen Rastmagneten auf, der im Betriebszustand des Laufwerkes ständig erregt ist und unter Federvorspannung steht. Entgegen der Federvorspannung wird dadurch ein Rasthebel als Teil eines rotatorisch bewegten Rastankers ständig in Freigabestellung gehalten. Sobald die Stromversorgung für den Laufwerksantrieb abgeschaltet wird oder ausfällt, wird auch der Rastmagnet nicht mehr erregt. Die vorgespannte Feder dreht dann den Rasthebel in eine Raststellung, nimmt dabei den Schwenkarm des Positionierers mit und führt diesen, sowie den zugeordneten Magnetkopf in die Landezone, wo sie durch den verspannten Rasthebel gehalten werden.

Eine weitere bekannte Lösung ist in JP-A-58-45 670, wenn auch nicht unbedingt in Verbindung mit einem Drehpositionierer, beschrieben. Es ist eine Rastvorrichtung vorgesehen, die den Positionierer im Falle eines Stromausfalles oder bei Stillsetzung des Laufwerkes in einer Rastposition und damit den Magnetkopf in einer Landezone festhält. Diese Vorrichtung enthält einen Rastmagneten, der gemeinsam mit dem Antriebsmotor des Laufwerkes an Versorgungsspannung liegt. Auch dieser Rastmagnet ist im Betriebsfall ständig erregt, so daß er eine unter Federvorspannung stehende Rastklinke in Freigabestellung hält. Im Falle eines Stromausfalles schwenkt die Rastklinke verzögert, d. h. nach Freigabe durch einen Auslösehebel in eine Rastposition. Dabei wird die Bewegung des Auslösehebels durch eine auflaufende Kante der Kopfträgereinrichtung gesteuert. Damit ist sichergestellt, daß die Rastklinke erst dann einfallen kann, wenn der Positionierer bereits die Rastposition erreicht hat.

Ein im Betriebszustand des Magnetplattenspeicher dauernd erregter Rastmagnet muß entsprechend dimensioniert sein und ist ein zusätzlicher Energieverbraucher. Es wäre wünschenswert, dies zu vermeiden und zugleich diese zusätzliche elektromagnetische Störquelle während des Betriebszustandes des Plattenspeichers auszuschalten.

Der Erfindung liegt daher die Aufgabe zugrunde, einen Drehpositionierer zu schaffen, der eine eindeutige und sichere Rastposition in Ruhestellung aufweist und störungsfrei in Betrieb zu setzen ist. Darüber hinaus ist anzustreben, daß sich der Übergang des Drehpositionierers von der Arbeitsstellung in diese Rastposition in definierter Weise vollzieht, um Kopfbeschädigungen zu vermeiden, d. h. die sichere Landung der Magnetköpfe innerhalb des Landebereiches herbeizuführen, der im allgemeinen mit den inneren, der Plattenspeichernabe zugekehrten Spuren auf den Magnetspeicherplatten identisch ist. In diesem Zusammenhang ist es darüber hinaus zweckmäßig, Vorkehrungen zu treffen, daß auch die andere Endstellung des Drehpositionierers, d. h. die maximal ausgeschwenkte Position in definierter Weise eingenommen, jedoch nicht überschritten wird.

Die obengenannte Aufgabe wird erfindungsgemäß bei der eingangs genannten Positioniereinrichtung für einen Magnetplattenspeicher mit den im Kennzeichen des Hauptanspruches beschriebenen Merkmalen gelöst. Bei dieser Lösung ist es von besonderem Vorteil, daß der Rastmagnet, mit dessen Hilfe die Rastposition des Drehpositionierers in definierter Weise gesichert wird, weder während des normalen Betriebes noch in der Ruhestellung des Plattenspeichergerätes erregt sein muß. Vielmehr genügt eine kurzzeitige Erregung des Rastmagneten, die durch einen Freigabeimpuls ausgelöst werden kann, um den Drehpositionierer zur Spurauswahl freizugeben. Durch die mechanische Selbsthalteeinrichtung des Rastmagneten bleibt dieser Zustand solange erhalten, bis sich im Falle einer Störung oder beim normalen Stillsetzen des Plattenspeichers der Drehpositionierer selbsttätig während des Auslaufens des Plattenstapels auf den Landebereich einstellt und dabei die mechanische Sperre des Rastmagneten entriegelt. Da der Rastmagnet immer nur im Kurzzeitbetrieb eingesetzt ist, kann er freizügiger dimensioniert werden. Außerdem wird er während des Betriebes weder als elektromagnetische Störquelle noch als unerwünschte Wärmequelle wirksam.

Eine vorteilhafte Weiterbildung der Erfindung besteht darin, daß der Rastanker des Rastmagneten als Zapfen ausgebildet ist und an dem einen aus dem Rastmagneten herausstehenden Ende einen scheibenförmigen Ansatz aufweist, daß als Rastfeder zwischen diesem Ansatz und dem Rastmagneten koaxial zum Rastanker eine dessen Federvorspannung bewirkende Druckfeder angeordnet ist und daß die Haltefeder einseitig am Rastmagneten festgelegt sowie achsenparallel zum Rastanker ausgerichtet ist und mit ihrem freien Ende an dem Ansatz des Rastankers angreift. Diese konstruktiv sehr einfache Lösung nutzt in vorteilhafter Weise die bereits erwähnte Tatsache aus, daß der Rastmagnet nur im Kurzzeitbetrieb eingesetzt wird, er daher freizügig dimensioniert sein kann und also auch ein entsprechend großer Hub des Rastankers ermöglicht wird.

Eine andere vorteilhafte Weiterbildung der Erfindung besteht darin, daß zusätzlich eine Abbremsvorrichtung vorgesehen ist, die, am Schwenkkörper angreifend, wirksam wird, sobald dieser in die der Rastposition entsprechende eingeschwenkte Endstellung läuft. Damit werden zwei Konstruktionsziele erreicht, einmal braucht damit nur sichergestellt zu werden, daß die Fixierung der Rastposition mit Hilfe des Rastmagneten jedenfalls eine Bewegung des Schwenkkörpers in Richtung des Datenbereiches der Magnetspeicherplatten verhindert. In Gegenrichtung wird die Abbremsvorrichtung wirksam, die ein Verschwenken des Drehpositionierers über den Landebereich hinaus in Richtung auf die Nabe des Plattenspeicherstapels verhindert. Zum andern dämpft die Abbremsvorrichtung die Schwenkbewegung des Schwenkkörpers in die Rastposition und trägt daher dazu bei, eine Beschädigung der empfindlichen Magnetköpfe beim Aufsetzen im Landebereich zu vermeiden. Weitere vorteilhafte Weiterbildungen sind weiteren Unteransprüchen zu entnehmen.

Ein Ausführungsbeispiel der Erfindung wird im folgenden anhand der Zeichnung näher beschrieben. Dabei zeigt:

Fig. 1 einen Schnitt durch ein Gehäuse eines Magnetplattenspeichers mit einem schematisch dargestellten Magnetplattenstapel und einem diesem zugeordneten Drehpositionierer,

Fig. 2 den prinzipiellen Aufbau dieses Drehpositionierers in einer dreidimensionalen Darstellung, insbesondere im Hinblick auf eine Ausführungsform der Einrichtungen zum Fixieren einer Rastposition des Schwenkkörpers,

Fig. 3 eine Teilansicht des Drehpositionierers von Fig. 2 von der Seite zur Verdeutlichung des Aufbaus des Rastmagneten und der Abbremsvorrichtung und

Fig. 4 und Fig. 5 zeigen zwei Ansichten einer weiteren Ausführungsform mit einer abgewandelten Rasteinrichtung.

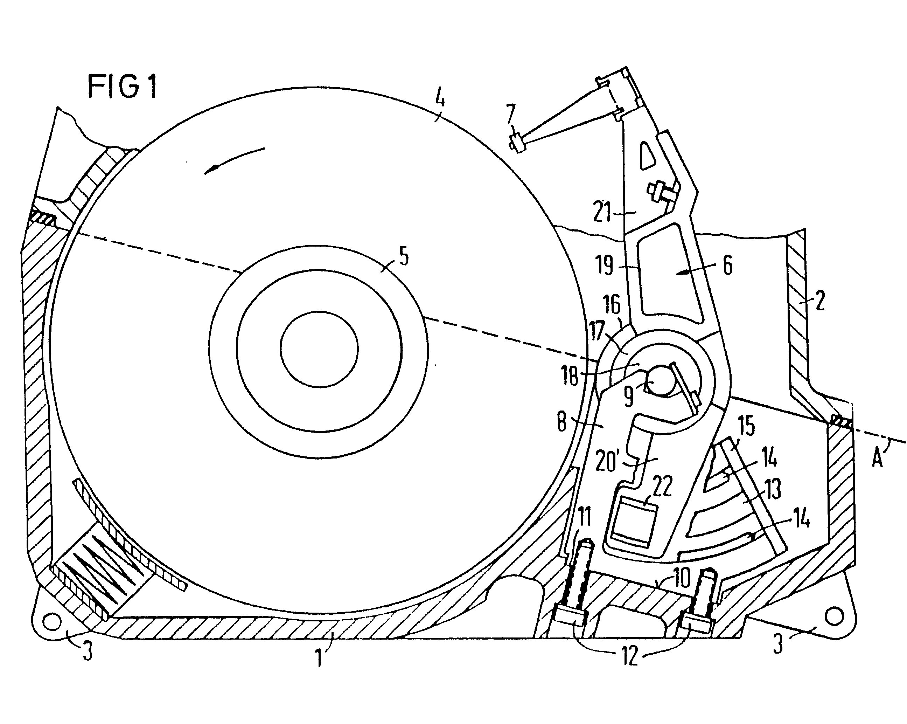

Das in Fig. 1 in einem Schnitt dargestellte Gehäuse eines Magnetplattenspeichers ist im wesentlichen ein rechteckförmiger Kasten, der längs einer diagonal verlaufenden Trennebene A in eine Tragschale und einen Deckel 2 unterteilt ist. Die Tragschale 1, aber auch der Deckel 2 besitzen jeweils Befestigungsösen 3, mit denen das Gehäuse z. B. in einem nicht dargestellten Rahmen aufgehängt werden kann.

Das Gehäuse ist aufgeschnitten dargestellt, um das Innere des Magnetplattenspeichers und damit seine wesentlichen Baueinheiten zu zeigen. Ein schematisch dargestellter Plattenstapel 4 läuft auf einer Nabe 5 in Pfeilrichtung um. Seitlich neben dem Plattenstapel 4 ist ein Drehpositionierer 6 angeordnet, der Magnetköpfe 7 trägt. Aus Gründen der Übersichtlichkeit ist der Drehpositionierer 6 in dieser Darstellung vereinfacht dargestellt und in einer aus dem Plattenstapel 4 herausgefahrenen Position gezeigt, die allerdings während des normalen Betriebes des Plattenspeichergerätes nicht eingenommen wird.

Der Drehpositionierer 6 besitzt einen U-förmig gestalteten Lagerbock 8, an dessen Schenkelenden eine Positioniererachse 9 festgelegt ist, die parallel zur Achse des Plattenstapels 4 ausgerichtet ist. Bei geringer Eintauchtiefe des Drehpositionierers in die Tragschale 1 ist aus fertigungstechnischen Gründen die Trennebene A, d. h. der Rand der Tragschale 1, die Maßbezugsebene für den Anschraubbereich des Lagerbockes 8 an eine Stirnwand der Tragschale 1. Dazu ist die Stirnwand im Anschraubbereich mit einer parallel zur Trennebene A verlaufenden Anschraubfläche 10 nach innen gezogen. Die Anschraubfläche 10 ist mit Ansätzen 11 in die Stirnwand eingeschnitten, so daß der Lagerbock 8 zentriert ist. Die Stirnwand der Tragschale 1 weist Durchgangsbohrungen auf, die Befestigungsschrauben 12 zum Befestigen des Lagerbockes 8 aufnehmen.

Der Drehpositionierer kann nach dem Schwenkspulprinzip, wie im vorliegenden Ausführungsbeispiel, oder aber nach dem Magnetankerprinzip ausgebildet sein. Im vorliegenden Fall bildet der Lagerbock 8 einen Teil des Magnetsystems. Dazu ist zwischen seinen Schenkeln ein Magnetkern 13 angeordnet, der als Kreisringabschnitt ausgebildet ist. Konzentrisch zu diesem Magnetkern 13 sind entsprechend geformte Permanentmagnete 14 im Lagerbock 8 angeordnet. Als Magnetjoch ist eine Rückflußplatte 15 an den freistehenden Enden des Magnetkernes bzw. der Permanentmagnete festgelegt. Der Lagerbock 8 übernimmt damit eine doppelte Funktion, er gestattet die Positioniererachse beidseitig zu lagern und bildet zugleich einen Teil des Magnetsystemes des Drehpositionierers 6.

Auf der feststehenden Positioniererachse 9 ist ein Schwenkkörper 16 drehbar gelagert. Er weist eine Nabe 17, die über schematisch dargestellte Kugellager 18 auf der Positioniererachse 9 drehbar angeordnet ist und außerdem Schwenkarme 19 bzw. Tragarme 20 und 20' auf, die bezüglich der Positioniererachse 9 einander im wesentlichen gegenüberstehend von der Nabe 17 abstehen. An jedem der Schwenkarme 19 ist eine Magnetkopfgrundplatte 21 befestigt, die ihrerseits ein Paar von federnd angeordneten Magnetköpfen 7 trägt. Die Tragarme 20 bzw. 20' dagegen sind parallel zueinander ausgerichtet und sitzen jeweils an einer der beiden Stirnseiten der Nabe 17 auf. Zwischen ihren freistehenden Enden ist eine Spule 22 angeordnet, die, den Magnetkern 13 umfassend, zwischen den Permanentmagneten 14 geführt ist. Es sei noch darauf hingewiesen, daß der Lagerbock 8 in Fig. 1 teilweise aufgeschnitten dargestellt ist, um dieses Magnetsystem des Drehpositionierers 6 besser zu zeigen. Die Spule 22 wird dadurch in der Darstellung von Fig. 1 sichtbar, da der dem Betrachter zugekehrte vordere Tragarm 20 abgeschnitten ist, d. h. nur der hintere Tragarm 20' sichtbar ist.

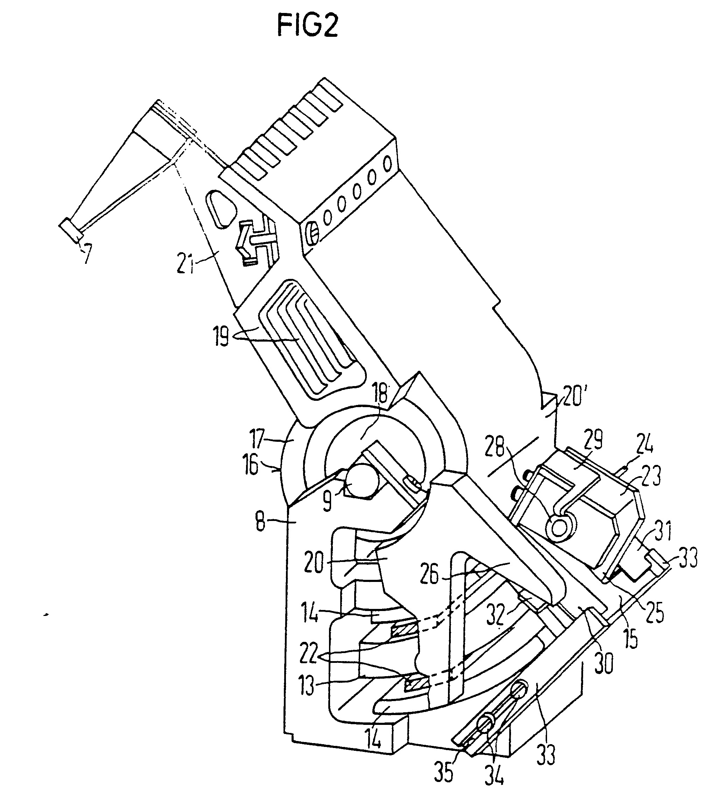

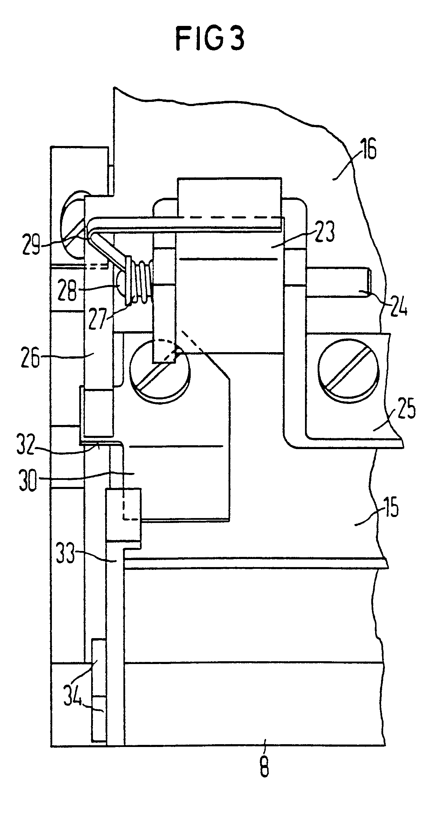

Während in Fig. 1 im wesentlichen schematisch der Gesamtaufbau des Plattenspeichergerätes und etwas detaillierter der Aufbau des Drehpositionierers 6 sowie seine Zuordnung zu dem Plattenstapel 4 dargestellt ist, sind weitere Einzelheiten des Drehpositionierers aus seiner dreidimensionalen Darstellung in Fig. 2 und einer Teilansicht von der Seite, die in Fig. 3 gezeigt ist, zu entnehmen. Im vorliegenden Zusammenhang sind insbesondere diejenigen konstruktiven Maßnahmen von Bedeutung, die dazu dienen, den Schwenkbereich des Drehpositionierers 6 eindeutig zu definieren und in einer der beiden Endstellungen dieses Bereiches eine Rastposition festzulegen.

Dazu ist ein Rastmagnet 23 auf der Rückflußplatte 15 und damit am Lagerbock 8 befestigt, dessen zapfenförmig ausgebildeter Rastanker 24 achsenparallel zur Positioniererachse 9 ausgerichtet ist. Für die ordnungsgemäße Funktion des Rastmagneten 23 spielt nicht nur diese Ausrichtung der Achse des Rastankers 24 sondern auch ihre Höhenlage eine Rolle. Die Darstellung in Fig. 2 macht deutlich, daß der Rastmagnet in einer zur Rückflußplatte 15 gekippten Lage über einen Winkel 25 an der Rückflußplatte 15 befestigt ist. Die so definierte Höhenlage der Achse des Rastankers 24 definiert die Rastposition des Drehpositionierers 6.

Diesem Rastmagneten 23 zugeordnet, ist nun zusätzlich zu dem vorderen Tragarm 20 am Schwenkkörper 16 ein Rastarm 26 vorgesehen, der, in der Drehebene dieses Tragarmes 20 liegend, gegenüber diesem Tragarm abgewinkelt ist. In Rastposition, die in Fig. 2 aus Gründen der Übersichtlichkeit nicht gewählt ist, ist der Drehpositionierer 6 nach einer Bewegung entgegen dem Uhrzeigersinn völlig in den Plattenstapel 4 eingeschwenkt. Dabei ist der Rastarm 26 soweit nach oben geschwenkt, daß er höher liegt als die Achse des Rastankers 24. Das dem Rastarm 26 zugekehrte Ende des Randankers 24 kommt dabei in Eingriff mit der Unterkante des Rastarmes und blockiert somit ein Rückschwenken des Rastarmes und damit des gesamten Schwenkkörpers 16.

Wie diese Funktion im einzelnen erzielt wird, läßt sich am besten aus einem Vergleich der Darstellungen von Fig. 2 und Fig. 3 entnehmen. In beiden Fällen ist der Drehpositionierer 6 in einer ausgelenkten Lage gezeigt, die einer Betriebsposition entspricht. In dieser Position steht der Rastanker 24 unter Federvorspannung, hervorgerufen durch eine Druckfeder 27, die, koaxial zu diesem angeordnet, zwischen dem Gehäuse des Rastmagneten 23 und dem Ende des Rastankers 24 angeordnet ist, das einen scheibenförmigen Ansatz 28 aufweist. In der in der Zeichnung dargestellten Betriebsposition des Drehpositionierers, d. h. der Freigabestellung des Rastmagneten 23, wird eine durch die Druckfeder 27 hervorgerufene Bewegung des Rastankers 24 in Richtung auf den Rastarm 26 begrenzt, um den Schwenkkörper 16 frei schwenkbar zu halten. Dies wird mit Hilfe einer Haltefeder 29 erreicht, die als Blattfeder ausgebildet und am Rastmagneten 23 befestigt ist. Die funktionswirksame Zunge der Haltefeder 29 ist parallel zur Achse des Rastankers 24 ausgerichtet und am vorderen Ende in Richtung auf diesen Anker umgebogen, um eine Rast für den Rastanker 24 zu bilden. In Betriebsposition liegt daher das umgebogene Ende der Haltefeder 29 außen an dem scheibenförmigen Ansatz 28 des Rastankers 24 an und sichert somit die Freigabestellung des Rastmagneten 23.

Läuft nun der Drehpositionierer 6 beim mormalen Abschalten des Plattenspeichergerätes oder auch im Störungsfall unter der Wirkung der elektromotorischen Kraft eines auslaufenden Antriebsmotors für den Plattenstapel 4 in den Landebereich für die Magnetköpfe 7 ein, dann wird die Haltefeder 29 durch das Verschwenken des Rastarmes 26 nach oben ausgelenkt und entriegelt den Rastanker 24. Der freigegebene Rastanker bewegt sich aufgrund der Vorspannung der Druckfeder 27 aus dem Rastmagneten 23 heraus, sobald der Rastarm 26 vorbeigeschwenkt ist. Damit ist die Rastposition des Drehpositionierers 6 in seiner eingeschwenkten Lage fixiert.

Wird nun das Plattenspeichergerät wieder in Betrieb genommen, so wird zum gegebenen Zeitpunkt der Rastmagnet 23 durch einen Freigabeimpuls kurzzeitig erregt. Der Rastanker 24 wird dabei in den Rastmagneten 23 zurückgezogen, damit der Rastarm 26 freigegeben und schließlich die Haltefeder 29 erneut eingerastet. Damit ist wieder die in den Fig. 2 und 3 dargestellte Freigabestellung für den Betrieb des Drehpositionierers 6 eingestellt. Sie wird gehalten, ohne daß der Rastmagnet 23 dabei erregt sein müßte.

Diese Begrenzung des Ausschwenkens des Drehpositionierers 6 wird nun für beide Endstellungen durch eine Abbremsvorrichtung unterstützt. Dazu sind neben dem Rastmagneten 23 zwei Blattfedern 30 bzw. 31 einseitig an der Rückflußplatte 15 festgelegt. Beide Bremsfedern 30 und 31 sind in analoger Weise ausgebildet und angeordnet, so daß es ausreichend erscheint, in den Fig. 2 und 3 nur eine dieser Bremsfedern in allen Einzelheiten zu zeigen. Die Darstellung in Fig. 2 macht deutlich, daß die Bremsfeder 30 gegenüber der Rückflußplatte 15 leicht abgewinkelt angeordnet ist und mit ihrem freien Ende durch eine seitlich am Lagerbock 8 verschiebbar befestigte Schiene 33 geführt ist. Dazu sind Befestigungsschrauben 34 in einem Längsschlitz 35 der Führungsschiene 33 angeordnet.

Durch die gewählte Position der Führungsschiene 33 wird die Lage der zugehörigen Bremsfeder, hier der Bremsfeder 30 so einjustiert, daß eine in die Drehebene der Tragarme 20 bzw. 20' vorspringende Zunge 32 der Bremsfedern 30 bzw. 31 eine definierte Höhenlage aufweist. Im Falle der ersten Bremsfeder 30 ist diese Höhenposition so eingestellt, daß der Rastarm 26 beim Verschwenken des Schwenkkörpers 16 im Uhrzeigersinn auf diese Zunge 32 auftrifft, sobald der Schwenkkörper in die ausgeschwenkte Endposition, den äußeren Randspuren des Datenbereiches auf den Plattenstapel 4 entsprechend, einläuft. Die Zunge 32 der ersten Bremsfeder 30 bildet damit einen federnden Außenanschlag zur Begrenzung des Schwenkbereiches des Schwenkkörpers 16.

Analog ist die Funktion der zweiten Bremsfeder 31 die eines Innenanschlages für die andere Endstellung, die mit der beschriebenen Rastposition des Schwenkkörpers identisch ist. Die Form des Tragarmes 20', der in Fig. 2 nur teilweise erkennbar ist, ist mit der des vorderen Tragarmes 20 identisch, wie sich aus einem Vergleich mit Fig. 1 ergibt. Es ist daher ohne weiteres einsehbar, daß die Seitenkante dieses hinteren Tragarmes 20' beim Einschwenken des Schwenkkörpers in die eingeschwenkte Endstellung, d. h. die Rastposition mit einer entsprechenden, hier nicht sichtbaren Zunge der Bremsfeder 31 in Eingriff kommt und damit das Einschwenken des Schwenkkörpers 16 in Richtung auf die Nabe 5 des Plattenstapels 4 begrenzt.

Die vorstehend beschriebene Ausführungsform genügt allen Foderungen hinsichtlich der Begrenzung des Schwenkbereiches des Drehpositionierers in Bezug auf beide Endstellungen und eine eindeutige Fixierung der Rastposition mit Hilfe eines sich selbst haltenden Rastmagneten. Innerhalb der aufgezeigten Lösungsmöglichkeiten sind jedoch auch andere Ausgestaltungen denkbar.

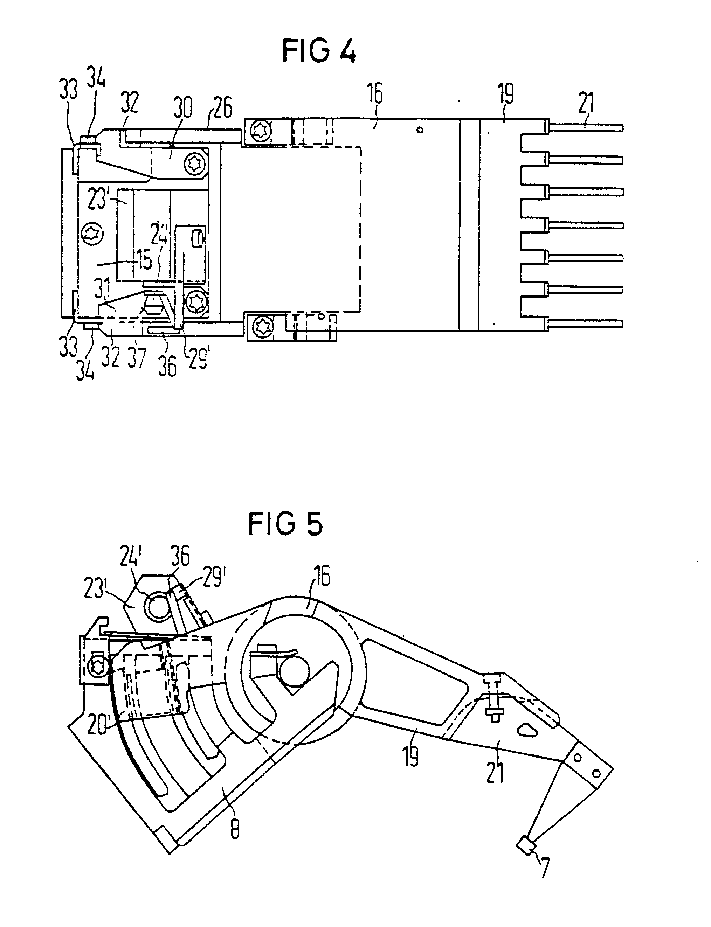

Eine solche weitere Ausführungsform ist in den Fig. 4 und 5 dargestellt. Hier ist die gesamte Verriegelungseinrichtung statt auf der dem Tragarm 20 zugekehrten Seite in analoger Weise auf der gegenüberliegenden Seite angeordnet. Der Rastarm 26 übernimmt hier nur die Begrenzungsfunktion für den Anschlag in der ausgeschwenkten Endstellung. Zum Verriegeln könnte ein wohl weiterer Rastarm in der Drehebene des Tragarmes 20' vorgesehen werden, hier ist ein Raststift 36 verwendet, der in der Drehebene des Tragarmes 20' liegend, seitlich von diesem absteht und eine entsprechend geformte Haltefeder 29' des Rastmagneten auslöst. Als weitere Umgestaltung bildet der Rastmagnet 23' zusammen mit der Rückflußplatte 15 eine bauliche Einheit. Der Rastanker 24' weist nun eine Kegelfläche 37 auf, die in Verbindung mit dem wegen des Kurzzeitbetriebes möglichen, relativ großen Hubes des Rastmagneten 23' einen Ausgleich für Fertigungstoleranzen erlaubt. In den Fig. 4 und 4 ist eine Positioniererlage dargestellt, in der der Drehpositionierer 6 freigegeben ist. Sollte er infolge einer Störung oder beim Abschalten in den Landebereich der Magnetköpfe 7 einschwenken, wird die Haltefeder 29' mittels des Raststiftes 36 entriegelt und damit der Rastanker 24' frei. Der Rastanker versperrt dann den Weg des Raststiftes 36 und hält damit den Drehpositionierer 6 fest.

**Patentansprüche**

1. Positioniereinrichtung für einen Magnetplattenspeicher nach Art eines durch ein Magnetantriebssystem schwenkbaren Drehpositionierers (6) mit einem eine Positioniererachse (9) tragenden Lagerbock (8), einem auf dieser Achse drehbeweglich gelagerten Schwenkkörper (16), der Magnetköpfe (7) tragende Schwenkarme (19) und ein bewegliches Element (22) des Magnetantriebssystemes tragende Tragarme (20, 20') aufweist und mit einer einen Rastmagneten (23, 23') aufweisenden Arretierungseinrichtung (23, 24, 26, 27, 28, 29 bzw. 23', 24', 29', 36, 37), die bei Außerbetriebsetzung des Magnetplattenspeichers den selbsttätig in eine Ruhestellung einlaufenden Schwenkkörper in dieser Ruhestellung mit Hilfe einer auf einen Rastanker (24 bzw. 24') des Rastmagneten einwirkenden Rastfeder (27) solange verriegelt, bis der Rastmagnet bei Wiederinbetriebnahme des Plattenspeichers erregt wird, dadurch gekennzeichnet, daß der Rastmagnet (23, 23') ein für kurzzeitige Erregung ausgelegter Magnet ist, der bei Inbetriebnahme des Magnetplattenspeichers erst im betriebsbereiten Zustand des Magnetplattenspeichers kurzzeitig erregt wird, daß ein Ende des Rastankers (24) unmittelbar das Verriegelungselement für den Schwenkkörper bildet und daß eine als Blattfeder ausgebildete Haltefeder (29, 29') derart angeordnet ist, daß sie den durch Erregung des Rastmagneten in eine Entriegelungsstellung zurückgezogenen Rastanker solange blockiert, bis sie von dem Schwenkkörper beim Wiedereinlaufen in die Ruhestellung ausgelenkt wird.

2. Positioniereinrichtung nach Anspruch 1, dadurch gekennzeichnet, daß der als Zapfen ausgebildete Rastanker an dem einen aus dem Rastmagneten (23) herausstehenden Ende einen scheibenförmigen Ansatz (28) aufweist und daß als Rastfeder zwischen diesem Ansatz und dem Rastmagneten (23) koaxial zum Rastanker eine dessen Federvorspannung bewirkende Druckfeder (27) angeordnet ist.

3. Positioniereinrichtung nach Anspruch 2, dadurch gekennzeichnet, daß die Haltefeder (29) einseitig an Rastmagneten (23) festgelegt, sowie achsenparallel zum Rastanker (24) ausgerichtet ist und mit ihrem freien Ende am Ansatz (28) des Rastankers angreift.

4. Positioniereinrichtung nach Anspruch 3, dadurch gekennzeichnet, daß das freie Ende der Haltefeder (29) hakenförmig in Richtung auf die Achse des Rastankers (24) umgebogen ist.

5. Positioniereinrichtung nach einem der Ansprüche 1 bis 4, dadurch gekennzeichnet, daß der Schwenkkörper (16) einen in gleicher Ebene mit einem der Tragarme (20, 20') liegenden, zu diesem um einen durch den Schwenkbereich des Drehpositionierers (6) vorgegebenen Winkel gedrehten Rastarm (26) aufweist, der bei Rückkehr des Schwenkkörpers (16) in Rastposition am zurückgezogenen Rastanker (24) vorbeilaufend diesen entriegelt und sich damit selbst feststellt.

6. Positioniereinrichtung nach Anspruch 5, dadurch gekennzeichnet, daß zusätzlich eine Abbremsvorrichtung (30, 31, 32, 33) vorgesehen ist, die am Schwenkkörper (16) angreifend, wirksam wird, sobald dieser in die der Rastposition entsprechende eingeschwenkte Endstellung läuft.

7. Positioniereinrichtung nach Anspruch 6, dadurch gekennzeichnet, daß die Bremsvorrichtung eine Bremsfeder (31) aufweist, die am Lagerbock (8) einseitig festgelegt, senkrecht zu der Drehebene des zugeordneten Tragarmes (20) angeordnet ist und eine seitlich abstehende Zunge (32) aufweist, die zwischen dem zugeordneten Tragarm (20) und dem Rastarm (26) angeordnet, in die Drehebene des zugeordneten Tragarmes (20) hineinreicht.

8. Positioniereinrichtung nach Anspruch 7, dadurch gekennzeichnet, daß zum Justieren der Bremsfeder (30) seitlich am Lagerbock (8) eine Schiene (33) in der Höhe verschiebbar angeordnet ist, die an dem der Bremsfeder zugewandten Ende eine Führung aufweist, in die das entsprechende Ende der Bremsfeder eingelegt ist.

9. Positioniereinrichtung nach Anspruch 8, <u>dadurch gekennzeichnet</u>, daß die Abbremsvorrichtung derart gestaltet ist, daß sie auch in entsprechender Weise in der ausgeschwenkten, der Raststellung entgegengesetzten Endstellung des Schwenkkörpers (16) wirksam wird.

10. Positioniereinrichtung nach Anspruch 9, <u>dadurch gekennzeichnet</u>, daß die Abbremsvorrichtung zum Abbremsen des Schwenkkörpers (16) in der ausgeschwenkten Endstellung eine zweite Bremsfeder mit einer entsprechenden seitlich abstehenden Zungen aufweist, die zwischen dem zugeordneten Tragarm (20) und dem Rastarm (26) angeordnet, in die Drehebene dieses Tragarmes hineinreicht.

11. Positioniereinrichtung nach Anspruch 10, <u>dadurch gekennzeichnet</u>, daß zum Abbremsen des Schwenkkörpers (16) in den beiden Endstellungen je eine eigene Bremsfeder (30 bzw. 31) vorgesehen ist und diese Bremsfedern mit ihren seitlich abstehenden Zungen (32) jeweils in die Drehebene eines der Tragarme (20 bzw. 20') hineinreichen, wobei sich in der ausgeschwenkten Endstellung der Rastarm (26) an die Zunge der zugeordneten Bremsfeder (30) und in der eingeschwenkten Endstellung der gegenüberliegende Tragarm (20') an die andere Bremsfeder (31) anlegt.

12. Positioniereinrichtung nach einem der Ansprüche 1 bis 4, <u>dadurch gekennzeichnet</u>, daß der Rastmagnet (23) zusammen mit einer das Magnetjoch des Drehpositionierers (6) bildenden Rückflußplatte eine bauliche Einheit bildet.

13. Positioniereinrichtung nach einem der Ansprüche 1 bis 4 oder 12, <u>dadurch gekennzeichnet</u>, daß der Rastanker (24') an seinem aus dem Rastmagneten (23') herausstehenden Ende eine Kegelfläche (37) aufweist und daß ein Raststift (36) vorgesehen ist, der am zugeordneten Tragarm (20') des Schwenkkörpers so befestigt ist, daß er bei Erreichen der Raststellung des Schwenkkörpers (6) den Rastanker (24') durch Wegdrücken der Haltefelder (29') freigibt und sich damit an der Kegelfläche (37) selbst blockiert.

**Claims**

1. Positioning device for a magnetic-disc memory of the type of a rotary positioner (6) pivotable by a magnetic drive system and having a bearing block (8) supporting a positioner axle (9), a pivot element (16) mounted rotatably on said axle, which exhibits pivot arms (19) supporting magnet heads (7) and support arms (20, 20') supporting a movable element (22) of the magnetic drive system and having an arresting device (23, 24, 26, 27, 28, 29 or 23', 24', 29', 36, 37) exhibiting a catch magnet (23, 23') which, when the magnetic-disc memory is switched off, locks the pivot element, which automatically enters a rest position, in said rest position by means of a catch spring (27) which influences a catch armature (24 or 24') of the catch magnet until the catch magnet is excited when the disc memory is switched on again, characterized in that the catch magnet (23, 23') is a magnet designed for brief excitation which is excited briefly only in the state of readiness of the magnetic-disc memory when the magnetic-disc memory is switched on, that an end of the catch armature (24) directly forms the locking element for the pivot element, and that a retaining spring (29, 29') constructed as a leaf spring is arranged so that it blocks the catch armature which is retracted into an unlocked position by the excitation of the catch magnet until it is deflected by the pivot element on reentry into the rest position.

2. Positioning device according to Claim 1, characterized in that the catch armature which is constructed as a pin exhibits a disc-shaped attachment (28) at the one end which protrudes from the catch magnet (23) and that a compression spring (27) which effects the spring pretensioning of the catch armature is arranged coaxially to the latter between said attachment and the catch magnet (23) as a catch spring.

3. Positioning device according to Claim 2, characterized in that the retaining spring (29) is anchored by one end to the catch magnet (23), aligned axially parallel to the catch armature (24), and engages the attachment (28) of the catch armature by its free end.

4. Positioning device according to Claim 3, characterized in that the free end of the retaining spring (29) is bent in hooked shape towards the axis of the catch armature (24).

5. Positioning device according to one of Claims 1 to 4, characterized in that the pivot element (16) exhibits a catch arm (26) located in the same plane with one of the support arms (20, 20') and rotated relative to the latter through an angle determined by the pivot range of the rotary positioner (6), which catch arm unlocks the retracted catch armature (24) in passing it during the return of the pivot element (16) into the catch position and thus fixes itself.

6. Positioning device according to Claim 5, characterized in that a braking device (30, 31, 32, 33) is provided additionally which becomes operative by engaging the pivot element (16) as soon as the latter enters the pivotally retracted limit position which corresponds to the catch position.

7. Positioning device according to Claim 6, characterized in that the brake device exhibits a brake spring (31) which is arranged anchored by one end to the bearing block (8), at right angles to the plane of rotation of the associated support arm (20), and exhibits a laterally projecting tongue (32) which, being arranged between the associated support arm (20) and the catch arm (26), extends into the plane of rotation of the associated support arm (20).

8. Positioning device according to Claim 7, characterized in that to adjust the brake spring (30) a rail (33) is vertically slidable on the side of the bearing block (8) and exhibits at the end facing the brake spring a guideway in which the corresponding end of the brake spring is inserted.

9. Positioning device according to Claim 8, characterized in that the braking device is conformed so that it also becomes operative in corresponding manner in the pivotally extended limit position of the pivot element (16) opposite the catch position.

10. Positioning device according to Claim 9, characterized in that to brake the pivot element (16) in the pivotally extended limit position, the braking device exhibits a second brake spring having a corresponding laterally projecting tongue which, being arranged between the associated support arm (20) and the catch arm (26), extends into the plane of rotation of said support arm.

11. Positioning device according to Claim 10, characterized in that to brake the pivot element (16) in the two limit positions a particular brake spring (30 or 31) each is provided and said brake springs respectively extend with their laterally projecting tongues (32) into the plane of rotation of one of the support arms (20 or 20'), whilst the catch arm (26) contacts the tongue of the associated brake spring (30) in the pivotally extended limit position and the opposite support arm (20') contacts the other brake spring (31) in the pivotally retracted limit position.

12. Positioning device according to one of Claims 1 to 4, characterized in that the catch magnet (23) forms a structural unit conjointly with a return plate which forms the magnet yoke of the rotary positioner (6).

13. Positioning device according to one of Claims 1 to 4 or 12, characterized in that the catch armature (24') exhibits a conical surface (37) at its end which projects from the catch magnet (23') and that a catch pin (36) is provided which is fastened to the associated support arm (20') of the pivot element so that when the rest position of the pivot element is reached it releases the catch armature (24') by pressing away the retaining spring (29') and thereby blocks itself on the conical surface (37).

**Revendications**

1. Dispositif de positionnement pour une mémoire à disques magnétiques, réalisé à la manière d'un dispositif de positionnement en rotation (6) pouvant pivoter sous l'action d'un système magnétique d'entraînement et comportant un bloc de support (8) portant l'axe (9) du dispositif de positionnement, un corps pivotant (16), qui est tourillonné de manière à pouvoir tourner sur cet axe et comporte des bras pivotants (19) portant des têtes magnétiques (7) et des bras de support (20, 20') portant un élément mobile (22) du système magnétique d'entraînement, et comportant un dispositif de blocage (23, 24, 26, 27, 28, 29 ou 23', 24', 29', 36, 37), qui comporte un aimant d'encliquetage (23, 23') et, dans le cas de la mise hors service de la mémoire à disques magnétiques, verrouille le corps pivotant, qui vient se placer automatiquement dans une position de repos, dans cette position à l'aide d'un ressort d'encliquetage (27), qui agit sur une armature d'encliquetage (24 ou 24') de l'aimant d'encliquetage, jusqu'à ce que l'aimant d'encliquetage soit excité lors de la remise en service de la mémoire à disques, caractérisé par le fait que l'aimant d'encliquetage (23, 23') est un aimant qui est conçu pour être soumis à une excitation de brève durée et est excité pendant un bref intervalle de temps, lors de la mise en service de la mémoire à disques magnétiques, uniquement lorsque cette mémoire est dans son état prêt à fonctionner, qu'une extrémité de l'armature d'encliquetage (24) forme directement l'élément de verrouillage pour le corps pivotant et qu'un ressort de retenue (29, 29') réalisé sous la forme d'un ressort en forme de lame est disposé de manière à bloquer l'armature d'encliquetage, rétractée dans une position déverrouillée sous l'effet de l'excitation de l'aimant d'encliquetage, jusqu'à ce que ce ressort soit dévié dans la position de repos par le corps pivotant lors du réenclenchement.

2. Dispositif de positionnement suivant la revendication 1, caractérisé par le fait que l'armature d'encliquetage réalisée sous la forme d'un téton comporte, sur une extrémité disposée en saillie hors de l'aimant d'encliquetage (23), un élément saillant en forme de disque (28) et qu'il est prévu, en tant que ressort d'encliquetage, dans une position coaxiale à l'armature d'encliquetage et ce entre cet élément saillant et l'aimant d'encliquetage (23), un ressort de pression (27) appliquant une précontrainte élastique à cette armature.

3. Dispositif de positionnement suivant la revendication 2, caractérisé par le fait que le ressort de maintien (29) est fixé d'un côté sur l'aimant d'encliquetage (23), est aligné de sorte que son axe est parallèle à l'armature d'encliquetage (24) et s'accroche, par son extrémité libre, sur l'élément saillant (28) de l'armature d'encliquetage.

4. Dispositif de positionnement suivant la revendication 3, caractérisé par le fait que l'extrémité libre du ressort de maintien (29) est repliée à la manière d'un crochet en direction de l'axe de l'armature d'encliquetage (24).

5. Dispositif de positionnement suivant l'une des revendications 1 à 4, caractérisé par le fait que le corps pivotant (16) comporte un bras d'encliquetage (26), qui est situé dans le même plan que l'un des bras (20, 20'), est pivote par rapport à ce bras, sur un angle prédéterminé par la plage de pivotement du dispositif de positionnement en rotation (6) et, lorsque le corps pivotant (7) retourné dans la position d'encliquetage en passant devant l'armature d'encliquetage (24) rétractée, verrouille cette dernière et se bloque par conséquent automatiquement.

6. Dispositif de positionnement suivant la revendication 5, caractérisé par le fait qu'il est en outre prévu un dispositif de freinage (30, 31, 32, 33), qui devient actif, en s'appliquant contre le corps pivotant (16), dès que ce dernier parvient dans sa position finale pivotée correspondant à la position d'encliquetage.

7. Dispositif de positionnement suivant la revendication 6, caractérisé par le fait que le dispositif de freinage comporte un ressort de freinage (31), qui est disposé, en étant fixé d'un côté sur le bloc de support (8), perpendiculairement au plan de rotation du bras de support associé, et possède une languette (32), qui fait saillie latéralement et, en étant située entre le bras de support associé (20) et le bras d'encliquetage (26), pénètre dans le plan de rotation du bras de support associé (20).

8. Dispositif de positionnement suivant la revendication 7, caractérisé par le fait que pour réaliser l'ajustement du ressort de frein (30) latéralement sur le bloc de support (8), il est prévu un rail (33), qui est déplaçable en hauteur et qui possède sur l'extrémité tournée vers le ressort de frein, un guide, dans lequel l'extrémité correspondante du ressort de frein est insérée.

9. Dispositif de positionnement suivant la revendication 8, caractérisé par le fait que le dispositif de freinage est conçu de telle sorte qu'il devient actif également de façon correspondante lorsque le corps pivotant (16) est dans sa position d'extrémité écartée par pivotement et située à l'opposé de la position d'encliquetage.

10. Dispositif de positionnement suivant la revendication 9, caractérisé par le fait que le dispositif de freinage comporte, pour le freinage du corps pivotant (16) dans sa position d'extrémité écartée par pivotement, un second ressort de frein comportant une languette correspondante, qui fait saillie latéralement et qui, dans une position située entre le bras de support associé (20) et le bras d'encliquetage (26), pénètre dans le plan de rotation de ce bras de support.

11. Dispositif de positionnement suivant la revendication 10, caractérisé par le fait que pour le freinage du corps pivotant (16) dans les deux positions d'extrémité, il est prévu des ressorts de frein particuliers respectifs (30 et 31), et que ces ressorts de frein pénètrent respectivement par leurs languettes (32), qui font saillie latéralement, dans le plan de rotation de l'un des bras de support (20 ou 20'), auquel cas le ressort de frein associé (30) s'applique contre la languette lorsque le bras d'encliquetage (26) est dans sa position d'extrémité écartée par pivotement, et s'applique contre l'autre ressort de frein (31), lorsque le bras de support opposé (20') est dans sa position d'extrémité rentrée par pivotement.

12. Dispositif de positionnement suivant l'une des revendications 1 à 4, caractérisé par le fait que l'aimant d'encliquetage (23) forme, conjointement avec une plaque de retour de flux, formant la culasse magnétique du dispositif de positionnement en rotation (6), une unité de construction.

13. Dispositif de positionnement suivant l'une des revendications 1 à 4 ou 12, caractérisé par le fait que l'armature d'encliquetage (24') possède une surface conique (37) au niveau de son extrémité qui fait saillie hors de l'aimant d'encliquetage (23'), et qu'il est prévu une broche d'encliquetage (36) qui est fixée sur le bras de support associé (20') du corps pivotant de manière que, lorsque le corps pivotant atteint sa position de repos, la tige d'encliquetage libère l'armature d'encliquetage (24') sous l'effet de l'écartement sous pression du ressort de maintien (29') et se bloque par conséquent automatiquement contre la surface conique (37).

FIG 1

EP 0 166 819 B1

# FIG2

# FIG 3

## FIG 4

## FIG 5